# EUROPEAN PATENT SPECIFICATION

(11) **EP 2 341 657 B1**
(45) Date of publication and mention of the grant of the patent: **23.05.2012**
(21) Application number: 10197119.0
(22) Date of filing: 28.12.2010
(51) Int. Cl.: H04L 9/08

(54) **Method for controlling the access to encrypted digital data**
Verfahren zur Zugriffskonftrolle von verschlüsselten digitalen daten
Méthode de contrôle d'accès à des données digitales chiffrées

(30) Priority: 29.12.2009 IT MI20092326
(43) Date of publication of application: 06.07.2011
(73) Proprietor: Antares S.r.l., 20033 Desio (IT)
(72) Inventor: Corradi, Vincenzo, 20033 Desio (IT)
(74) Representative: Raimondi, Margherita

(56) References cited:
- US-B1- 6 370 251
- BLAZE M: "KEY MANAGEMENT IN AN ENCRYPTING FILE SYSTEM", PROCEEDINGS OF THE SUMMER USENIX CONFERENCE, XX, XX, 6 June 1994 (1994-06-06), pages 27-35, XP009002548,
- Martin, Ben: "Put Your Syslog Messages in a Database Over the Network", LINUXFOUNDATION.ORG The Linux Foundation, 14 August 2009 (2009-08-14), XP002596005, Retrieved from the Internet: URL:http://ldn.linuxfoundation.org/node/35 504 [retrieved on 2010-08-10]
- Papizan, Ken: "PHP Timeclock", http://sourceforge.net/ SOURCEFORGE.NET, 20 June 2006 (2006-06-20), XP002596006, http://sourceforge.net/ Retrieved from the Internet: URL:http://timeclock.sourceforge.net/ [retrieved on 2010-08-11]

## Description

The present invention relates to a method for controlling the access to encrypted digital data contained in a storage medium.

It is known that, in the technical sector relating to data management by means of computers, there exists the need to use systems for recording access by the system administrators to the data stored in the computer, in order to avoid random and/or fraudulent manipulation.

In particular, these recording systems must have the characteristics of being complete, unmodifiable and suitable for allowing verification of their integrity.

It is also known from "Key Management in an Encrypting File System" by Matt Blaze (AT&T Laboratories) and "Put Your Syslog Messages in a Database Over the Network" by Martin Ben (LINUXFOUNDATION.ORG) that security systems have been developed, these systems being for example based on the use of keys for accessing said data which are distributed to several persons within a company authorized to keep said keys; these procedures, however, are not suitable for the above-defined objects since the concealment of a possible illicit act may be in the interest of the company itself and therefore result in all the members of said company being involved in the defence of a common interest and/or being advised to act in accordance with specially defined rules. Likewise it is unacceptable that any third parties (software firms, consultants, installation engineers, etc.) who are called upon to implement a dedicated software may be aware of these procedures and possess the keys for accessing them with the possibility of manipulating the data; the economic relationship between customer and supplier could in fact result in the stipulation of agreements which are in breach of the law.

A further known solution is that where the company undertakes to carry out daily saving of all the data classified as unmodifiable on a non-rewritable optical medium; this procedure, however, gives rise to a further problem associated with a daily operation performed by persons who, prior to saving the data, might inappropriately modify said data and generate a large number of disks which in turn create further problems and costs arising from the need for maintenance, certification of authenticity and storage thereof; in addition, it is not possible to prevent access to any sensitive stored data by unauthorized custodians, where required.

The technical problem which is posed, therefore, is to develop a procedure which ensures, on the one hand, the effective impossibility of modifying data contained in files, folders or entire disks by any user within or outside of the company, having access to said data and, on the other hand, that the procedure is such that the access to the original encrypted data for any checks is restricted exclusively to an authorized Inspection Body and that this access should be totally automatic in nature, i.e. without any human intervention during any stages of said operation.

In connection with this problem it is also required that this method should be easy and inexpensive to install at any user premises via normal computer system accessing means.

These results are achieved according to the present invention by a method for controlling the access to encrypted digital data according to the characteristic features of Claim 1.

Further details may be obtained from the following description of a non-limiting example of embodiment of a method according to the present invention, in which the terms below are understood as having the following meaning:

### USER

Physical person or corporate body, owner of the computer in which the encrypted data or data to be encrypted is stored;

### CUSTODIAN

Physical person or corporate body (Notary or the like), independent of the USER and authorized to have custody of the decryption keys;

### INSPECTION BODY

Physical person or corporate body (Post Office Police, Finance Police, Judge or the like) independent of the USER and the CUSTODIAN and exclusively empowered to request and/or authorize withdrawal of the Private Key from the CUSTODIAN;

### INSTALLATION ENGINEER

Physical person or corporate body having the technical and procedural expertise for managing the handover/withdrawal of the Private Key for decryption at the request of the INSPECTION BODY and for activating at the USER's premises the procedures for encrypting and decrypting the data. With these definitions the method comprises the following steps:
a) Execution of preliminary operations performed by the INSTALLATION ENGINEER;
b) Handover and recovery of the Key to/from the CUSTODIAN
c) Execution of operations at the USER's premises
d) Decryption, able to be performed solely by the INSPECTION BODY

In greater detail:
a) Preliminary operations carried out by the INSTALLATION ENGINEER
   a1) creation of the encryption/decryption keys; during this step the following are created:
      - an Encryption Key - called Public Key - by means of which the owners may perform encryption of the files available in plain text;
         and
      - a Decryption Key - called Private Key - by means of which the sole possessor may perform decryption of the files; during creation of the Private Key a unique Serial Number is assigned to the Key for the purposes of identification thereof;
      the Public and Private Keys may be unique in the sense that a single pair thereof valid for all Users is created, it being envisaged that access enabling/decryption is performed solely in the presence of both keys, one of which (Private Key) is, however, never accessible to the USER, as will become clearer below;
   a2) creation of a physical medium for storing the Private Key;
      during this step a Smart Card or a Token is used as the physical medium for the Private Key which is written onto the device itself, said device being provided with a microprocessor useful for acquiring automatically and storing information relating to the date when the Private Key was last used and all that information which may certify the correct management of the device limited to the actual occasions envisaged by the procedure and described below;
   a3) Verification and printing of the Serial Number, which can be read by means of the decryption program at the time of withdrawal/handover of the Private Key, so that the Parties involved in handover/withdrawal of the medium may check that the Key has not been swapped;
   a4) creation of a recording Log for storing the data (serial number, date and time, person effecting withdrawal) relating to handover/withdrawal of the physical medium, so as to be able to carry out a cross-check of the Private Key user data stored in the microprocessor of the physical medium with the data contained in the aforementioned recording Log;
      during this step and after performing the necessary operational checks,
   a5) the Smart Card or Token with, enclosed, the password for protecting the instruction files contained in the decryption file is inserted inside an envelope containing also: the print-out of the serial number verified and signed by the CUSTODIAN following a check carried out in situ, the reference data of the INSTALLATION ENGINEER and the indication that the envelope may be delivered only to the INSPECTION BODY or to the person indicated by them, the delivery log showing all the withdrawal and deposition operations which will remain for the entire life of the Key.
b) Handover of the Private Key to the CUSTODIAN
   The INSTALLATION ENGINEER may now deliver the envelope to the CUSTODIAN - for example a Notary or Certification Body - whose data shall be stored in plain text in the text file contained in a decryption folder present at the premises of each USER.
   During initial deposition the first line in the recording Log shall be filled in, thus officially certifying handover of the Key and activation of the procedure.
c) Operations performed at the USER's premises
   c1) Installation of any dedicated application programs for collection and centralization of the files to be subsequently processed
      During this step the INSTALLATION ENGINEER installs on the computer containing the data to be protected, or on one of the computers connected to it in a network, so as to be able in any case to manage the aforementioned data, the programs which have the function of collecting the files to undergo the procedure and sending them to the designated unit for encryption processing;
   c2) Creation of a folder containing the files required for decryption
      The folder is protected by means of symmetrical encryption and is accessible by means of a password enclosed in plain text in the envelope containing the physical medium on which the Private Key is recorded and held by the CUSTODIAN.
      The decryption folder contains in particular a file in plain text and four files protected by a password, namely:
      -) an instruction file in plain text for activating the procedure for accessing the encrypted data;
      -) a protected file which contains the instructions reserved for the INSPECTION BODY;
      -) a protected file containing a first proprietary application which allows identification, by the decryption program, of the files containing the data;
      -) a protected file containing a proprietary application which processes the encrypted data files, converting them from the condition where they can be identified by the decryption programs to the prior condition where they cannot be identified by said programs;
      -) a protected file able to install a driver for reading of the Private Key by the INSPECTION BODY who authorizes the decryption program;
   c3) Encryption of the files to be protected After initial handover of the physical medium containing the Private Key to the CUSTODIAN who ensures that the Private Key is made inaccessible to third parties, it is possible to start the step for encryption of the data in plain text at the premises of the USER or USERS;
      during this step:
      - an encryption program is activated, fetching the files to be encrypted and generating in the background, i.e. without any action by the Operator, an encrypted copy thereof, keeping the original in plain text for free consultation, or deleting them where it is also required that the stored data should not be able to consulted; the encrypted copy is generated using algorithms of proven impenetrability, using, respectively, as Encryption Key and Decryption Key the Public Key and Private Key generated during step a);
d) Decryption operations able to be performed solely by the INSPECTION BODY
   If necessary, and solely upon request of an INSPECTION BODY, initiation of the procedure for accessing the encrypted data and for automatic decryption;
   Should access to the encrypted data be required by the INSPECTION BODY for analysis thereof, the method envisages the following steps:
   d1) Access to the computer to be inspected by the INSPECTION BODY and opening of the text file which is generated initially in plain text on the Collection Server and which contains an instruction to contact the INSTALLATION ENGINEER in order to gain possession of the password so as to open the files which are encrypted in simple form; the folder is, in fact, in plain text, but the support files contained in them are encrypted and may be opened only by means of a password supplied verbally by the INSTALLATION ENGINEER;
      In the meantime, in order to protect the physical storage of the encrypted data, the person appointed to carry out the check shall be responsible for extracting said files, storing them on an associated medium by way of a simple security measure so that, in the event of a known fraudulent act, said files are not deleted from the internal records of the USER being verified.
      The extracted files will not in any case be legible until the Private Key is physically in the possession of the authorized Body.
   d2) submission of the authorization to the CUSTODIAN and withdrawal of the physical medium containing the Private Key;
   d3) recording, in the Log recording the handover/withdrawal operations, of the following: serial number of the Private Key, date and time of withdrawal; data of the INSPECTION BODY effecting the withdrawal and, where permitted by the privacy laws, the name of the USER being verified.
   d4) access of the INSPECTION BODY to the computer containing the files to be verified and insertion of the Private Key in a corresponding reader;
   d5) verification that the data stored in the memory of the Smart Card or Token, automatically collected and relating to the last access operation matches the data contained in the Log recording the access operations;
   d6) automatic registration, performed by the Smart Card, of the latest access;
   d7) initiation of the procedure for decryption via the instructions and programs contained in the decryption folder;
   d8) extraction of the physical medium and therefore of the Private Key.
      At the end of the inspection performed at the USER's premises, the Private Key will be extracted, the decryption program uninstalled and the folder containing all the data closed again, using the plain text password.
      The generation of the encrypted stored files in the meantime has not been interrupted and the system continues to operate automatically;
   d9) handing back of the Private Key to the CUSTODIAN following prior identification thereof and recording of the handover in the access recording Log using the same operating procedures as those used for withdrawal.
      In the meantime, in order to protect physical storage of the files which are now decrypted and therefore legible in plain text, the person appointed to perform verification shall be responsible for extracting the same, storing them on an associated medium so that they are available for the necessary inspection operations.
      It is therefore clear how the method according to the invention envisages as essential measures for ensuring that the encrypted data cannot be accessed by persons who might be intent upon manipulating them:
      -) safekeeping of the physical medium containing the Private Key by a neutral CUSTODIAN;
      -) identification of a sole INSPECTION BODY legally authorized to retrieve the Private Key;
      -) the necessity for an authorization issued by the INSPECTION BODY to obtain handover of the physical medium containing the Private Key;
      -) the simultaneous recording, on the physical medium, of the Private Key and in a separate recording Log kept by the INSPECTION BODY, of the data relating to the sequence of operations for accessing the encrypted data;
      this ensuring that the possession of the Smart Card or Token for decryption of the Log files is not transferrable in any way, said possession being restricted exclusively to the INSPECTION BODY.

In addition to the generation of the pair of Public and Private keys which permit access only if used in pairs and the exclusive possession of the Private Key by a CUSTODIAN as described above, a single pair of keys which can be used for a plurality of different USERS may be generated so that it is possible to ensure the safekeeping and availability of a single Private Key which activates the inspection procedure when used together with the Public Key in possession of each USER.

Owing to the intrinsic features of inviolability offered by the procedure, even in the event of a theft involving the CUSTODIAN or destruction of the Private Key, the encrypted files, during the minimum storage period stipulated by the regulations, will be entirely unusable.

It is, however, possible to perform parallel encryption of the same data, safekeeping of which is assigned to a CUSTODIAN different and remote from the CUSTODIAN safeguarding the first encryption. The impossibility of being able to interpret the encrypted data managed by the first Key will be compensated for by the possible decryption of the duplicate file.

A Private Key occasionally lost and the associated medium will be regenerated and from this moment onwards the high reliability procedure will be reactivated.

Although described in connection with certain constructional forms and certain preferred examples of embodiment of the invention, it is understood that the scope of protection of the present patent is defined solely by the following claims.

## Claims

1. Method for controlling the access to encrypted digital data saved on a storage medium of a USER, comprising the following steps:
a1) creating a Public Encryption Key and a Private Decryption Key;
a2) encrypted storage of the Private Decryption Key on a physical medium;
a3) assignment of a unique Serial Number identifying the Private Decryption Key at the time when it is created;
a4) creation of a Log for recording the operations for handover/withdrawal of the physical medium;
a5) Deposition of the Private Decryption Key with an external and independent CUSTODIAN;
b1) installation of dedicated application programs for encryption of the data on a computer available at the USER's premises;
b2) creating, at the USER's premises, a folder containing dedicated decryption programs;
c) starting, at the USER's premises, the automatic procedure for encryption of files by means of encryption programs, using the Public Encryption Key and Private Decryption Key generated during step a1) as the encryption key and decryption key, respectively;
d) access of an INSPECTION BODY to the computer to be inspected;
e) start of the automatic decryption procedure;
**characterized in that** it comprises the further steps, of:
d1) request, by the INSPECTION BODY, for verification at the USER's premises;
d2) issue, by the INSPECTION BODY, of an authorization for withdrawal of the Private Decryption Key;
d3) request for release of the Private Decryption Key by the CUSTODIAN with presentation of the request received from the INSPECTION BODY and consequent compilation of the Log recording the operations for access to the encrypted data;
d4) handover of the Private Decryption Key to the authorized INSPECTION BODY, following verification of the Serial Number of the Private Decryption Key
and the further decryption steps involving:
e1) checking by the INSPECTION BODY that the data contained on the physical medium of the Private Decryption Key matches the data contained in the recording Log;
e2) recording of the new access operation on the physical medium of the Privatey Decryption Key inserted during accessing of the encrypted data;
e3) opening of the files for decryption of the encrypted data and decryption thereof;
e4) extraction of the Private Decryption Key and closing of support files used for implementing the procedure;
e5) handing back of the physical medium to the CUSTODIAN with renewed verification of the Serial Number of the Private Decryption Key and recording of the data relating to handover in the recording Log.

2. Method according to Claim 1, **characterized in that** the physical medium for storing the private decryption key is a Smart Card or a Token.

3. Method according to Claim 1, **characterized in that** said decryption folder contains at least:
a file in plain text and four files protected by a password and, respectively:
-) an instruction file in plain text for activating the procedure for accessing the encrypted data;
-) a protected file which contains the instructions reserved for the INSPECTION BODY;
-) a protected file containing a first proprietary application which allows identification, by the decryption program, of the files containing the data;
-) a protected file containing a proprietary application which processes the encrypted data files, converting them from the condition where they can be identified by the decryption programs to the prior condition where they cannot be identified by said programs;
-) a protected file able to install a driver for reading of the Private Key by the INSPECTION BODY who authorizes the decryption program.

4. Method according to Claim 1, **characterized in that** the encryption procedure is performed in background mode.

## Patentansprüche

1. Verfahren für die Kontrolle des Zugriffs auf chiffrierte digitale Daten, welche auf einem Speichermedium eines BENUTZERS gespeichert sind, wobei das Verfahren die folgenden Schritte umfasst:
a1) Erzeugen eines Öffentlichen Chiffrierungsschlüssels und eines Privaten Dechiffrierungsschlüssels;
a2) chiffriertes Speichern des Privaten Dechiffrierungsschlüssels auf einem physischen Medium;
a3) Zuordnen einer eindeutigen Seriennummer, welche den Privaten Dechiffrierungsschlüssel zum Zeitpunkt seiner Erzeugung kennzeichnet;
a4) Erzeugen eines Protokolls für die Aufzeichnung der Vorgänge für die Übergabe / Rücknahme des physischen Mediums;
a5) Hinterlegen des Privaten Dechiffrierungsschlüssels bei einem externen und unabhängigen KUSTODEN;
b1) Installieren von zugeordneten Anwendungsprogrammen für die Chiffrierung der Daten auf einem Computer, welcher in den Räumlichkeiten des BENUTZERS verfügbar ist;
b2) Erzeugen, in den Räumlichkeiten des BENUTZERS, eines Ordners mit zugeordneten Dechiffrierungs-Programmen;
c) Starten, in den Räumlichkeiten des BENUTZERS, des automatischen Verfahrens zur Chiffrierung von Dateien mittels Chiffrierungs-Programmen unter Verwendung des Öffentlichen Chiffrierungsschlüssels und des Privaten Dechiffrierungsschlüssels, welche im Schritt a1) als der Chiffrierungsschlüssel, respektive der Dechiffrierungsschlüssel erzeugt wurden;
d) Zugriff eines KONTROLLORGANS auf den zu kontrollierenden Computer;
e) Starten des automatischen Dechiffrierungsverfahrens,
**dadurch gekennzeichnet, dass** das Verfahren die weiteren Schritte umfasst:
d1) Ersuchen, durch das KONTROLLORGAN, für eine Verifizierung in den Räumlichkeiten des BENUTZERS;
d2) Erlassen, durch das KONTROLLORGAN, einer Genehmigung für die Rücknahme des Privaten Dechiffrierungsschlüssels;
d3) Ersuchen der Freigabe des Privaten Dechiffrierungsschlüssels beim KUSTODEN unter Vorlage des vom KONTROLLORGAN erhaltenen Gesuchs und
nachfolgende Kompilierung des Protokolls, welches die Operationen für den Zugriff auf die chiffrierten Daten aufzeichnet;
d4) Übergeben des Privaten Dechiffrierungsschlüssels an das autorisierte KONTROLLORGAN, nach Überprüfung der Seriennummer des Privaten Dechiffrierungsschlüssels;
und die weiteren Dechiffrierungsschritte umfassend:
e1) Überprüfen durch das KONTROLLORGAN, dass die Daten, welche auf dem physischen Medium des Privaten Dechiffrierungsschlüssels enthalten sind, mit den Daten übereinstimmen, welche im aufzeichnenden Protokoll enthalten sind;
e2) Aufzeichnen der neuen Zugriffsoperation auf dem physischen Medium des Privaten Dechiffrierungsschlüssels, welches während des Zugriffs auf die chiffrierten Daten eingefügt wurde;
e3) Öffnen der Dateien für die Dechiffrierung der chiffrierten Daten und Dechiffrieren derselben;
e4) Extrahieren des Privaten Dechiffrierungsschlüssels und Schließen der Support-Dateien, welche zur Durchführung des Verfahrens verwendet wurden;
e5) Zurückgeben des physischen Mediums an den KUSTODEN mit erneuter Überprüfung der Seriennummer des Privaten Dechiffrierungsschlüssels und Aufzeichnen der die Übergabe betreffenden Daten im aufzeichnenden Protokoll.

2. Verfahren nach Anspruch 1, **dadurch gekennzeichnet, dass** das physische Medium zum Speichern des privaten Dechiffrierungsschlüssels eine Smart Card oder ein Zeichen (Token) ist.

3. Verfahren nach Anspruch 1, **dadurch gekennzeichnet, dass** der Dechiffrierungs-Ordner mindestens enthält:
eine Datei im Klartext und vier durch ein Passwort geschützte Dateien, beziehungsweise:
-) eine Instruktionsdatei in Klartext zum Aktivieren des Verfahrens für den Zugriff auf die chiffrierten Daten;
-) eine geschützte Datei, die die für das KONTROLLORGAN reservierten Anweisungen enthält;
-) eine geschützte Datei, die eine erste benutzereigene Anwendung enthält, welche die Identifizierung der die Daten enthaltenden Dateien durch das Dechiffrierungsprogramm ermöglicht;
-) eine geschützte Datei, die eine benutzereigene Anwendung enthält, die die chiffrierten Daten-Dateien verarbeitet, um sie von dem Zustand, in dem sie von den Dechiffrierungsprogrammen identifiziert werden können, in den früheren Zustand umzuwandeln, in dem sie durch die Programme nicht identifiziert werden können;
-) eine geschützte Datei, die fähig ist, einen Treiber zum Lesen des Privaten Schlüssels durch das KONTROLLORGAN zu installieren, welches das Dechiffrierungsprogramm autorisiert.

4. Verfahren nach Anspruch 1, **dadurch gekennzeichnet, dass** das Chiffrierungsverfahren in einem Hintergrundmodus durchgeführt wird.

## Revendications

1. Procédé de contrôle d'accès à des données numériques cryptées sauvegardées sur un support de stockage d'un UTILISATEUR, comprenant les étapes suivantes :
a1) création d'une Clé de Cryptage Publique et une Clé de Décryptage Privée;
a2) stockage crypté de la Clé de Décryptage Privée sur un support physique ;
a3) assignation d'un Numéro de Série unique identifiant la Clé de Décryptage Privée au moment où elle est créée ;
a4) création d'un Journal permettant d'enregistrer les opérations de mise à disposition/retrait du support physique ;
a5) dépôt de la Clé de Décryptage Privée chez un GARDIEN externe indépendant ;
b1) installation de programmes d'application spécialisés pour un cryptage des données sur un ordinateur disponible au niveau des locaux de l'UTILISATEUR ;
b2) création au niveau des locaux de l'UTILISATEUR d'un dossier contenant des programmes de décryptage spécialisés ;
c) démarrage, au niveau des locaux de l'UTILISATEUR de la procédure automatique correspondant au cryptage des fichiers à l'aide des programmes de cryptage, utilisant la Clé de Cryptage Publique et la Clé de Décryptage Privée générées pendant l'étape a1) comme Clé de Cryptage et Clé de Décryptage, respectivement ;
d) faire accéder l'ORGANE de CONTRÔLE à l'ordinateur à des fins de contrôle ;
e) démarrage de la procédure automatique de décryptage ;
**caractérisé en ce qu'**il comprend les étapes supplémentaires consistant à :
d1) demander, par l'ORGANE de CONTRÔLE une vérification au niveau des locaux de l'UTILISATEUR ;
d2) délivrer, par l'ORGANE de CONTRÔLE, une autorisation pour le retrait de la Clé de Décryptage Privée;
d3) demander une libération de la Clé de décryptage Privée par le GARDIEN avec présentation de la requête reçue à partir de l'ORGANE de CONTRÔLE et la compilation logique du Journal enregistrant les opérations permettant d'accéder aux données cryptées ;
d4) mise à disposition de la Clé de Décryptage Privée pour l'ORGANE de CONTRÔLE à la suite de la vérification du Numéro de Série de la Clé de Décryptage Privée;
et les étapes de décryptage supplémentaires impliquant :
e1) une vérification par l'ORGANE de CONTRÔLE que les données contenues sur le support physique de la Clé de Décryptage Privée coïncident avec les données contenues dans le Journal d'enregistrement ;
e2) un enregistrement de la nouvelle opération d'accès sur le support physique de la Clé de Décryptage Privée insérée pendant l'accès aux données cryptées ;
e3) l'ouverture des fichiers pour décryptage des données cryptées et décryptage de ces dernières ;
e4) l'extraction de la Clé de Décryptage Privée et la fermeture des fichiers d'assistance utilisés pour mettre en oeuvre la procédure ;
e5) remise du support physique au GARDIEN avec vérification renouvelée du Numéro de Série de la Clé de Décryptage Privée et enregistrement des données relatives à la transmission dans le Journal d'enregistrement.

2. Procédé selon la revendication 1, **caractérisé en ce que** le support physique destiné à stocker la Clé de Décryptage Privée est une Carte à Puce ou un Jeton

3. Procédé selon la revendication 1, **caractérisé en ce que** ledit dossier de décryptage contient au moins :
un fichier de texte en clair et quatre fichiers protégés par un mot de passe et, respectivement :
-) un fichier d'instruction à texte en clair pour activer la procédure permettant l'accès aux données cryptées ;
-) un fichier protégé qui contient les instructions réservées pour l'ORGANE de CONTRÔLE ;
-) un fichier protégé contenant une première application privée qui permet une identification, par le programme de décryptage, des fichiers contenant les données ;
-) un fichier protégé contenant une application privée qui traite les fichiers de données cryptées, en les convertissant de l'état dans lequel ils peuvent être identifiés par les programmes de décryptage en l'état antérieur dans lequel ils ne peuvent pas être identifiés par lesdits programmes ;
-) un fichier protégé capable d'installer un gestionnaire pour une lecture de la Clé Privée par l'ORGANE de CONTRÔLE qui autorise le programme de décryptage.

4. Procédé selon la revendication 1, **caractérisé en ce que** la procédure de cryptage est exécutée en mode de base.
